# EUROPÄISCHE PATENTSCHRIFT

(11) **EP 0 544 939 B1**
(45) Veröffentlichungstag und Bekanntmachung des Hinweises auf die Patenterteilung: **01.05.1996**
(21) Anmeldenummer: 91120868.4
(22) Anmeldetag: 05.12.1991
(51) Int. Cl.: G01N 3/04

(54) **Keilspannzeug für Prüfmaschinen**
Wedge clamp for testing device
Dispositif d'attelage en coin pour machine d'essai

(43) Veröffentlichungstag der Anmeldung: 09.06.1993
(73) Patentinhaber: CARL SCHENCK AG, D-64273 Darmstadt (DE)
(72) Erfinder: Pohl, Andreas, Ing.-grad., W-6114 Gross-Umstadt (DE)
(74) Vertreter: Brandt, Ernst-Ulrich, Dipl.-Phys., Dipl.-Ing.

(56) Entgegenhaltungen:
- EP-A- 0 257 104
- EP-A- 0 300 702
- WO-A-83/03003
- DE-A- 2 141 566
- DE-U- 8 529 717
- US-A- 3 335 603

## Beschreibung

Die Erfindung betrifft ein Keilspannzeug für Prüfmaschinen

Derartige Keilspannzeuge sind in einer Vielzahl von Ausführungen bekannt geworden, wobei sich die Keilspannzeuge zum einen in der Bauart des Keilspanngehäuses ("geschlossen", "offen", "halboffen") unterscheiden können und zum anderen je nach Beanspruchungsart der zu prüfenden Probe (Zug, Druck, Zug/Druck) in der Konstruktion unterschiedlich ausgebildet sind.

Aus der DE-AS 2 141 566 ist beispielsweise ein Keilspannzeug der "offenen Bauart" bekannt, welches ausschließlich für Zugfestigkeitsprüfungen bei Rund- oder Flachproben angewandt wird. Bei diesen Keilspannzeug ist das Keilspanngehäuse mit einem keilförmigen Spannmaul versehen, in dem keilförmige Spannelemente sogenannte Keilspannbacken axial verschieblich gelagert sind. Durch die Keilform des Spannmauls und der Spannelemente wird bei axialer Bewegung gleichzeitig eine radiale (Spann-) Bewegung der Spannelemente erzeugt. Zur Verspannung von Proben werden die Keilspannbacken durch den Kolben einer Zylinderkolbeneinheit in axialer Richtung beaufschlagt. Zur Lösung der Verspannung wird die Zylinderkolbeneinheit drucklos gemacht. Durch an den Keilspannbacken angeordnete Zugfedern, die der Spannkraft der Zylinderkolbeneinheit entgegenwirken, werden die Keilspannbacken in ihre Ausgangsstellung zurückgeführt und damit die Einspannung gelöst. Die Rückzugsbewegung der Keilspannbacken kann auch durch die Zylinderkolbenanordnung bewirkt werden (EP-A-0 257 104). Das Keilspanngehäuse ist derart ausgebildet, daß die Probe seitlich in das Gehäuse eingeführt werden kann, was eine einfache und schnelle Einspannung der Probe ermöglicht. Die Spannelemente und das die Spannelemente aufnehmende Keilspanngehäuse sind derart ausgebildet, daß die Selbsthemmung der Keile bei Zugbelastung der Probe ausgenutzt werden kann.

Diese sogenannte "offene Bauart" des Keilspannzeugs hat zum Nachteil, daß das Keilspanngehäuse aufgrund der aufzunehmenden Kräfte bei Belastung der Probe relativ groß dimensioniert sein muß, damit es nicht zu einem Auffedern des Keilspanngehäuses kommt. Zur Verminderung des Auffederns des Keilspanngehäuses ist beispielsweise ein Keilspannzeug bekannt geworden, bei dem um das Keilspanngehäuse ein hydraulisch verschiebbares, ringförmiges Spannstück angeordnet ist (DE-GM 1 977 205).

Ein Keilspannzeug der "geschlossenen Bauart" zur Zug-/Druckbelastung der Probe ist aus der US 3,335,603 und aus EP 0 300 702 bekannt. Bei diesem Keilspannzeug sind die Spannkeile in einem allseitig geschlossenen Gehäuse angeordnet. Bei dieser geschlossenen Bauart muß die Probe in Längsrichtung in das Keilspannzeug eingeführt werden, was ein zeitaufwendiges Längsverschieben eines der beiden Keilspannköpfe mit sich bringt. Vorteilhaft bei diesem Keilspannzeug ist jedoch die geringe Baugröße bedingt durch die geschlossene Bauart.

Weiterhin ist ein Keilspannzeug bekannt, das zur Druckbelastung der Probe eingesetzt wird. Bei diesem Keilspannzeug sind die Spannkeile derart in das entsprechende Keilspanngehäuse eingesetzt und ausgebildet, daß die Druckkraft, die in die Probe eingeleitet wird, ein Schließen der Keile bewirkt.

Aufgabe der vorliegenden Erfindung ist es, ein universell einsetzbares Keilspannzeug zu schaffen, welches hinsichtlich der konstruktiven Abmessungen kompakt aufgebaut ist, für alle Belastungsfälle einsetzbar ist, ein schnelles Einspannen der Probe gewährleistet und trotzdem hohen Beanspruchungen standhält.

Diese Aufgabe wird durch die im Patentanspruch 1 angegebenen Merkmale gelöst. Durch die erfindungsgemäße Ausgestaltung des Keilspannzeugs werden die Vorteile des "geschlossenen" und des "offenen" Keilspannzeugs erreicht. Das Keilspannzeug gemäß Patentanspruch 1 ermöglicht ein seitliches Einführen der Probe zwischen die Keilspannbacken und kann trotzdem kompakt aufgebaut sein, da die konische Ausnehmung im Betätigungselement derart ausgebildet ist, daß sie sich auf das Probenende hin verjüngt. Die Keilspannbacken werden über am Keilspanngehäuse angeordnete Mittel formschlüssig gehalten, so daß das Keilspannzeug zur Zug- und/oder Druckbelastung einsetzbar ist.

Durch die Ausbildung gemäß Patentanspruch 2, das Keilspannzeug druckmittelbetätigbar auszubilden, können auf einfache Weise gesteuert Spannkräfte zum Spannen der Probe aufgebracht werden. Der Prüfvorgang kann somit auch automatisiert werden.

Gemäß Patentanspruch 3 sind das Keilspanngehäuse und das Betätigungselement so ausgebildet, daß zwei Druckmittelräume entstehen. Dies hat zum Vorteil, daß die hydraulische Kraft zum Spannen der Probe über die große Kolbenfläche aufgebracht wird, und zum Entspannen der Probe über die kleinere Ringfläche erfolgt.

Die Verwendung von zwei Keilspannbacken stellt die einfachste Möglichkeit zum Einspannen einer Probe dar. Gemäß Patentanspruch 5 sind die Einspannbacken mit Rillen versehen. Diese Ausbildung ermöglicht ein kraft-/formschlüssiges Festklemmen der Probe.

Die Weiterbildung gemäß Patentanspruch 6 ermöglicht den Einsatz des Keilspannzeugs zur Torsionsbelastung von Proben.

Die Erfindung wird nachfolgend an einem Ausführungsbeispiel in den Zeichnungen dargestellt und in der Beschreibung näher erläutert. Es zeigen:
- Fig. 1:: ein erfindungsgemäßes Keilspannzeug im Teilschnitt; wobei die linke Seite das Keilspannzeug in Seitenansicht und die rechte Seite das Keilspannzeug in Schnittdarstellung zeigt,
- Fig. 2:: einen Schnitt längs der Linie II-II in Fig. 1 jedoch ohne eingespannte Probe,
- Fig. 3:: eine Draufsicht auf das Betätigungselement,
- Fig. 4:: eine Seitenansicht des Betätigungselements,
- Fig. 5:: eine Ansicht einer Keilspannbacke,
- Fig. 6:: eine Draufsicht einer Keilspannbacke,
- Fig. 7:: eine Seitenansicht einer Keilspannbacke,
- Fig. 8:: eine Draufsicht auf das Keilspanngehäuse,
- Fig. 9:: einen Schnitt längs der Linie IV-IV in Fig. 8.

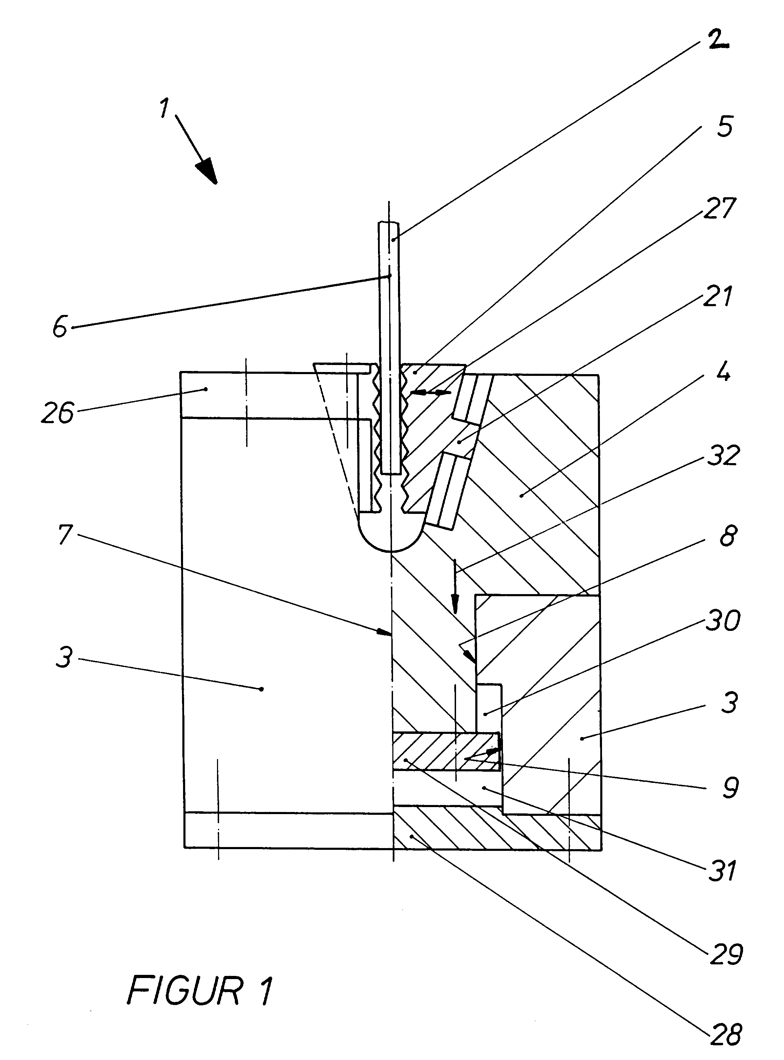

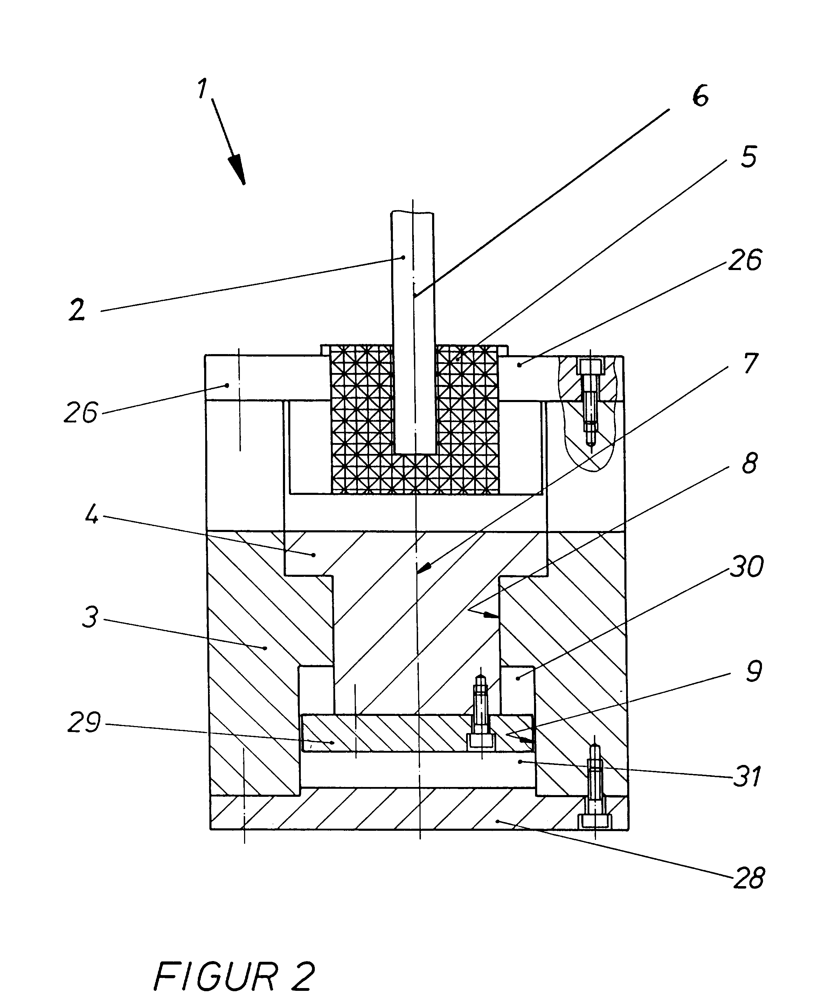

Fig. 1 zeigt ein unteres druckmittelbetriebenes Keilspannzeug 1, in das eine Flachprobe 2 zur Zug- und/oder Druck- und/oder Torsionsbelastung eingespannt ist. In einer nicht dargestellten Prüfmaschine sind zwei Keilspannzeuge in Vertikalrichtung fluchtend übereinander angeordnet, wobei das obere Keilspannzeug beispielsweise an der Quertraverse des Belastungsrahmens der Prüfmaschine angeordnet sein kann und das untere Keilspannzeug mit einer nicht dargestellten Belastungseinrichtung verbunden ist. Das obere und das untere Keilspannzeug haben den gleichen konstruktiven Aufbau, daher wird nur das untere Keilspannzeug 1 in Fig. 1 und Fig. 2 dargestellt und anschließend beschrieben.

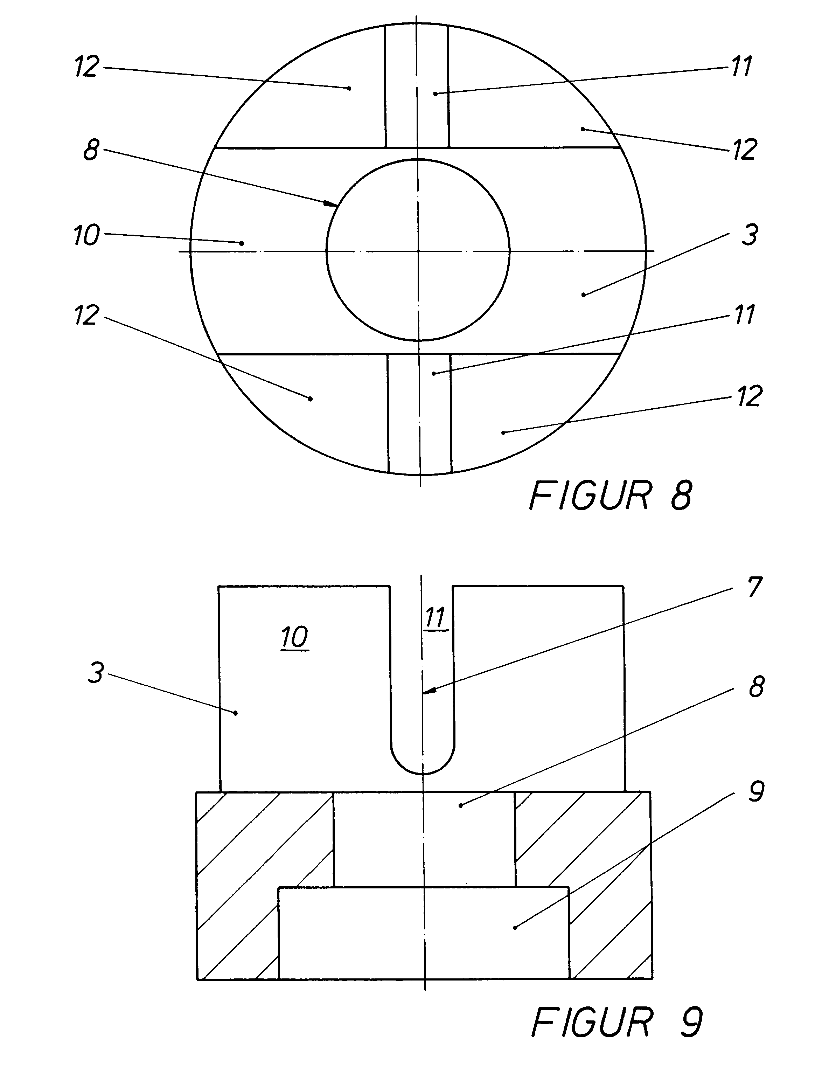

Das in den Figuren 1 und 2 dargestellte untere druckmittelbetriebene Keilspannzeug 1 besteht im wesentlichen aus einem Keilspanngehäuse 3, einem Betätigungselement 4 und einem Paar Keilspannbacken 5 zum Einspannen einer Probe 2. Die Probe weist eine Probenlängsachse 6 auf. Das Keilspanngehäuse 3 ist zylindrisch ausgebildet und weist in Zylinderlängsachse 7 eine Durchgangsbohrung 8 auf. Ausgehend von der Unterseite des Keilspanngehäuses 3 ist weiterhin koaxial zur Durchgangsbohrung 8 eine Senkbohrung 9 eingebracht. In die obere Hälfte des Keilspanngehäuses 3 ist quer zur Zylinderlängsachse 7 mittig eine durchgehende, sich über den gesamten Durchmesser des Keilspanngehäuses 3 sich erstreckende Ausnehmung 10 eingebracht, wobei die Breite der Ausnehmung 10 größer als der Durchmesser der Durchgangsbohrung 8 ist, so daß im oberen Bereich des Keilspanngehäuses 3 zunächst zwei kreissegmentförmige Elemente stehen bleiben. Diese sind mittig durch eine senkrecht zur Ausnehmung 10 verlaufende Nut 11 durchtrennt, so daß im oberen Bereich des Keilspanngehäuses 3 lediglich vier in Zylinderlängsachse 7 sich erstreckende Zapfen 12 verbleiben. Das Keilspanngehäuse 3 ist in den Figuren 8 und 9 als Einzelteil dargestellt.

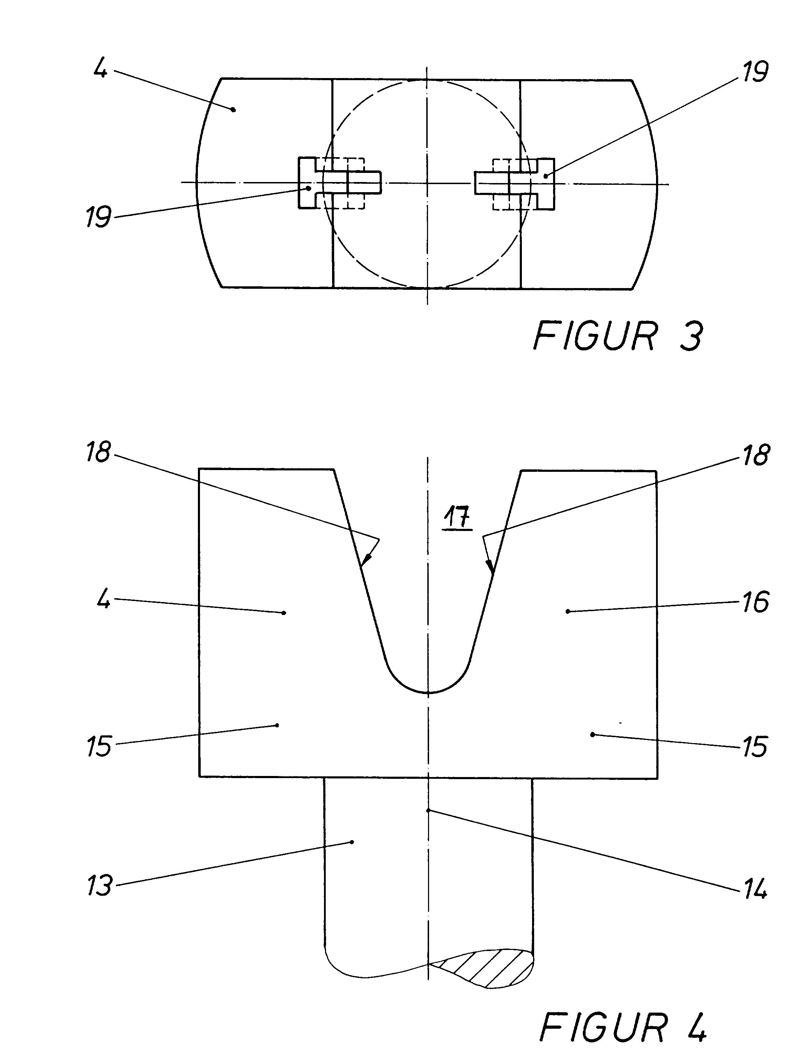

In dem Keilspanngehäuse 3 ist das Betätigungselement 4 längsverschieblich angeordnet. Die Ausgestaltung des Betätigungselementes 4 wird anhand der Figuren 3 und 4 beschrieben. Das Betätigungselement 4 weist in seinem unteren Bereich einen zylindrischen Teil 13 auf, wobei der Durchmesser des zylindrischen Teils 13 dem Durchmesser der Durchgangsbohrung 8 des Keilspanngehäuses 3 angepaßt ist. In Längsrichtung 14 schließen sich an den zylindrischen Teil 13 radiale Erweiterungen 15 an, die derart ausgeformt sind, daß dieser an den zylindrischen Teil 13 anschließende obere Teilbereich 16, der durch die radialen Erweiterungen 15 gebildet wird, an die Form und Größe der Ausnehmung 10 des Keilspanngehäuses 3 angepaßt ist. In diesen oberen Teilbereich 16 des Betätigungselementes 4 ist mittig eine über die gesamte Breite sich erstreckende konisch zu dem zylindrischen Teil 13 sich verjüngende Ausnehmung 17 eingebracht. In die die Ausnehmung 17 begrenzenden Seitenwände 18 ist jeweils mittig eine T-Nut 19 eingebracht, die zur Führung der Keilspannbacken 5 dient.

Die Keilspannbacken 5 zum Festklemmen der Probe 2 bzw. eines Probenendes sind, wie es aus den Figuren 1 und 2 ersichtlich ist, in dem Betätigungselement 4 gleitend geführt. Hierzu weisen die Keilspannbacken 5 jeweils eine konisch ausgebildete Gleitfläche 20 auf, die der Seitenwand 18 der Ausnehmung 17 angepaßt ist und weist ein an diese Gleitfläche 20 angebrachtes T-Stück 21 auf, welches exakt in die T-Nut 19 der Seitenfwand 18 paßt und womit eine Führung der Keilspannbacken 5 längs der Seitenwand 18 gewährleistet ist. Desweiteren weisen die Keilspannbacken 5 jeweils eine Probeneinspannfläche 22 zum Einspannen des Probenendes 2 auf, die zum besseren Festklemmen und Halten des Probenendes 2 mit Rillen 23 versehen sein kann. In dem Ausführungsbeispiel gemäß Fig. 1 ist eine Flachprobe zwischen den Keilspannbacken 5 eingeklemmt. Hierfür sind die Probeneinspannflächen 22 eben ausgebildet und verlaufen parallel zueinander.

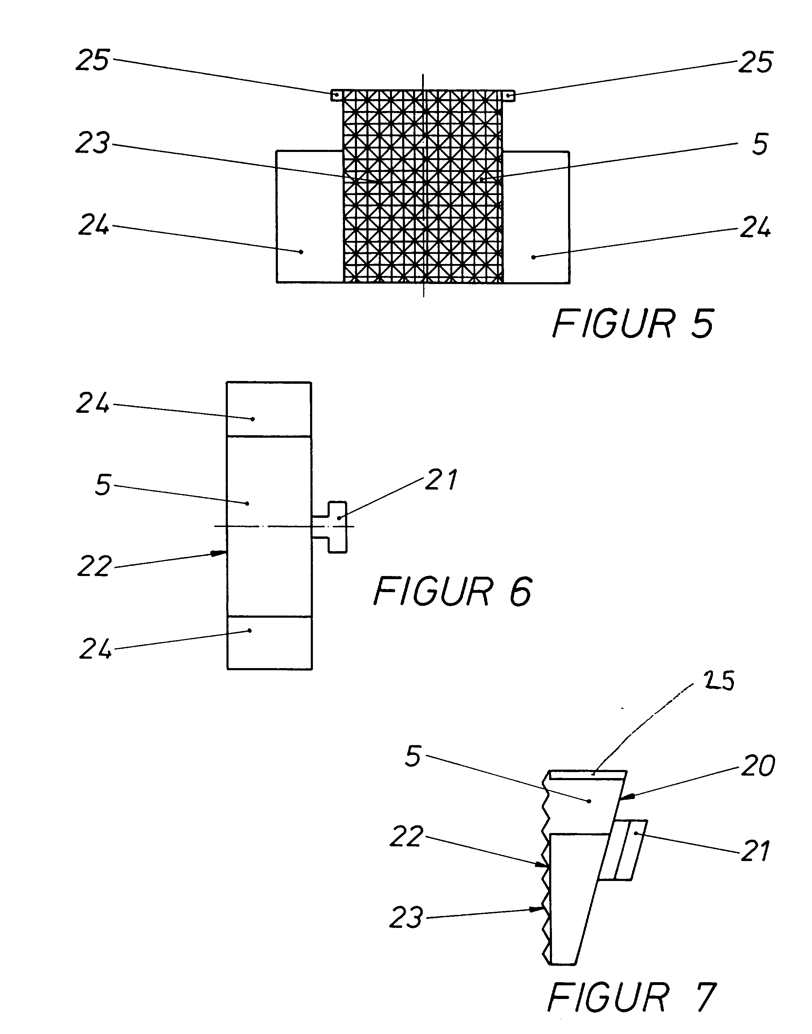

Die Keilspannbacken 5 sind als Einzelteile in den Figuren 5, 6 und 7 näher dargestellt. Aus den Figuren 5, 6 und 7 ist ersichtlich, daß die Keilspannbacken 5 jeweils seitlich sich erweiternde Führungselemente 24 aufweisen und am oberen, dem eingespannten Probenende abgewandten Seite der Keilspannbacken 5 jeweils seitlich nach außen ragende, über die gesamte Breite sich erstreckende, leistenförmige Vorsprünge 25 aufweisen. Die Keilspannbacken 5 werden über an den Zapfen 12 des Keilspanngehäuses 3 befestigten Deckelteile 26, die zwischen den Führungselementen 24 der Keilspannbacken 5 und den leistenförmigen Vorsprüngen 25 angeordnet sind, in Richtung des Pfeils 27 auf das Probenende 2 formschlüssig geführt.

Das Keilspanngehäuse 3 und das Betätigungselement 4 mit eingesetzten Keilspannbacken 5 sind derart angeordnet, daß ein seitliches Einführen der Probe 2 zwischen die Keilspannbacken 5 möglich ist.

Das in den Figuren 1 und 2 dargestellte Keilspannzeug 1 ist druckmittelbetätigt. Die Druckmittelräume werden durch das Keilspanngehäuse 3 und das Betätigungselement 4 gebildet. Hierzu ist das Keilspanngehäuse 3 mit einem Deckelteil 28 abgeschlossen. Desweiteren ist an den zylindrischen Teil 13 des Betätigungselementes 4 ein kolbenförmiges Element 29 angeschraubt, so daß zwischen Betätigungselement 4 und Keilspanngehäuse 3 zwei Druckmittelkammern 30, 31 entstehen. Die Zu- und Abführkanäle des Druckmittels zu den Druckmittelkammern 30, 31 sowie entsprechende Dichtungen sind der Einfachheit halber in den Figuren nicht dargestellt.

Bei Druckbeaufschlagung der Druckmittelkammer 30 verschiebt sich das Betätigungselement 4 in Richtung des Pfeils 32 in Probenlängsachse nach unten und befindet sich in der eingezeichneten Stellung. Die Keilspannbacken 5, die einerseits über die Deckelteile 26 in Richtung des Pfeils 27 verschieblich geführt sind und andererseits in den T-Nuten 19 des Betätigungselements 4 geführt sind, bewegen sich aufgrund der Längsverschiebung des Betätigungselements 4 in Richtung des Pfeils 27 weiter voneinander weg, was ein Lösen der Einspannung der Probe 2 bewirkt. Zum Einspannen der Probe 2 wird die Druckmittelkammer 31 mit Druckmittel beaufschlagt.

## Patentansprüche

1. Keilspannzeug zum Einspannen von Proben in Prüfmaschinen, mit einem Keilspanngehäuse (3) und ein in dieses einsetzbares in Probenlängsachse (6) verschiebliches Betätigungselement (4), in das Keilspannbacken (5) zum Einspannen eines Probenendes der Probe (2) in einer konischen Ausnehmung (17) gleitend geführt sind, und wobei die Ausnehmung (17) und die Keilspannbacken (5) derart ausgebildet sind, daß sie sich auf das eingespannte Probenende hin verjüngen, und daß an der der Probe (2) zugewandten Seite des Keilspanngehäuses (3) Mittel (26) zum formschlüssigen Halten der Keilspannbacken (5) angeordnet sind, die eine Verschiebung der Keilspannbacken (5) in Richtung der Probenlängsachse (6) verhindern, jedoch eine Verschiebung der Keilspannbacken (5) quer zur Probenlängsachse (6) zulassen, und wobei Keilspanngehäuse (3) und Betätigungselement (4) mindestens eine Ausnehmung (11, 17) zum seitlichen Einführen der Probe (2) zwischen die Keilspannbacken (5) aufweist.

2. Keilspannzeug nach Patentanspruch 1, wobei das Keilspannzeug (1) druckmittelbetätigbar ist.

3. Keilspannzeug nach Patentanspruch 2, wobei das Keilspanngehäuse (3) und das Betätigungselement (4) so ausgebildet sind, daß zwei Druckmittelräume (30, 31) entstehen.

4. Keilspannzeug nach einem der vorhergehenden Ansprüche, wobei zwei Keilspannbacken (5) zum Festklemmen der Probe (2) angeordnet sind.

5. Keilspannzeug nach Patentanspruch 4, wobei die Keilspannbacken (5) zwei parallele Einspannflächen (22) aufweisen, die mit Rillen (23) versehen sind.

6. Keilspannzeug nach einem der vorhergehenden Ansprüche, wobei die formschlüssigen Mittel (26) ein Verdrehen der Keilspannbacken (5) um die Probenlängsachse (6) verhindern.

## Claims

1. Wedge-type clamping device for clamping samples into testing machines, having a wedge clamp housing (3) and an operating element (4), which is insertable into said housing and displaceable in sample longitudinal axis (6) and into which wedge clamping jaws (5) for clamping an end of the sample (2) are slidingly guided in a conical recess (17), and wherein the recess (17) and the wedge clamping jaws (5) are so constructed that they taper towards the clamped sample end, and that at the side of the wedge clamp housing (3) facing the sample (2) means (26) of holding the wedge clamping jaws (5) in a form-fit manner are disposed which prevent a displacement of the wedge clamping jaws (5) in the direction of the sample longitudinal axis (6) but allow a displacement of the wedge clamping jaws (5) at right angles to the sample longitudinal axis (6), and wherein the wedge clamp housing (3) and the operating element (4) have at least one recess (11, 17) for lateral introduction of the sample (2) between the wedge clamping jaws (5).

2. Wedge-type clamping device according to claim 1, wherein the wedge clamping device (1) is operated by pressure medium.

3. Wedge-type clamping device according to claim 2, wherein the wedge clamp housing (3) and the operating element (4) are constructed so as to create two pressure medium chambers (30, 31).

4. Wedge-type clamping device according to one of the preceding claims, wherein two wedge clamping jaws (5) are disposed for firmly clamping the sample (2).

5. Wedge-type clamping device according to claim 4, wherein the wedge clamping jaws (5) have two parallel clamping faces (22) which are provided with grooves (23).

6. Wedge-type clamping device according to one of the preceding claims, wherein the form-fit means (26) prevent a rotation of the wedge clamping jaws (5) about the sample longitudinal axis (6).

## Revendications

1. Dispositif de serrage en coin pour le serrage d'éprouvettes dans des machines d'essai, avec un boîtier de serrage en coin (3) et un élément d'actionnement (4) coulissant dans l'axe longitudinal de l'éprouvette (6), à placer dans le boîtier, dans lequel des mâchoires de serrage en coin (5), pour le serrage de l'extrémité de l'éprouvette (2), sont guidées glissantes dans un évidement (17) conique, et dans lequel l'évidement (17) et les mâchoires de serrage en coin (5) sont réalisées de manière qu'elles se rétrécissent vers l'extrémité de l'éprouvette serrée à l'intérieur et en ce que sur le côté, tourné vers l'éprouvette (2), du boîtier de serrage en coin (3), sont prévus des moyens (26) pour le maintien par concordance de forme des mâchoires de serrage en coin (5), qui empêchent un coulissement des mâchoires de serrage en coin (5) dans la direction de l'axe longitudinal de l'éprouvette (6), mais autorisent un coulissement des mâchoires de serrage en coin (5) transversalement à l'axe longitudinal de l'éprouvette (6), et dans lequel le boîtier de serrage en coin (3) et l'élément d'actionnement (4) présentent au moins un évidement (11, 17) pour l'introduction latérale de l'éprouvette (2) entre les mâchoires de serrage en coin (5).

2. Dispositif de serrage en coin selon la revendication 1, dans lequel le dispositif de serrage en coin (1) peut être actionné par un fluide sous pression.

3. Dispositif de serrage en coin selon la revendication 2, dans lequel le boîtier de serrage en coin (3) et l'élément d'actionnement (4) sont réalisés de manière qu'il se forme deux chambres de fluide sous pression (30, 31).

4. Dispositif de serrage en coin selon l'une des revendications précédentes, dans lequel deux mâchoires de serrage en coin (5) sont prévues pour le blocage serré de l'éprouvette (2).

5. Dispositif de serrage en coin selon la revendication 4, dans lequel les mâchoires de serrage en coin (5) présentent deux surfaces de serrage (22) parallèles, qui sont pourvues de gorges (23).

6. Dispositif de serrage en coin selon l'une des revendications précédentes, dans lequel les moyens (26) d'assemblage par concordance de forme empêchent une rotation des mâchoires de serrage en coin (5) autour de l'axe longitudinal de l'éprouvette (6).
